# FASCICULE DE BREVET EUROPEEN

(11) **EP 3 038 963 B1**
(45) Date de publication et mention de la délivrance du brevet: **04.10.2017**
(21) Numéro de dépôt: 14790656.4
(22) Date de dépôt: 06.08.2014
(51) Int. Cl.: B65H 19/18, B65H 21/00

(54) **PROCEDE DE RABOUTAGE DE DEUX ARTICLES THERMOFUSIBLES SOUS FORME DE BANDES OU DE NAPPES, ET MODULE DE RABOUTAGE POUR LA MISE EN OEUVRE DUDIT PROCEDE**
VERFAHREN ZUM VERSCHWEISSEN ZWEIER THERMOSCHMELZBARER ARTIKEL IN FORM VON STREIFEN ODER SCHICHTEN UND SPLEISSMODUL ZUR DURCHFÜHRUNG DIESES VERFAHRENS
METHOD FOR SPLICING TWO THERMOFUSIBLE ARTICLES IN THE FORM OF STRIPS OR LAYERS, AND SPLICING MODULE FOR IMPLEMENTING SAID METHOD

(30) Priorité: 29.08.2013 FR 1358250
(43) Date de publication de la demande: 06.07.2016
(73) Titulaire: Spoolex, 42230 Roche La Moliere (FR)
(72) Inventeur: LASSALLE, Luc, F-42100 Saint-Etienne (FR); MOUNIER, Christophe, F-42230 Roche la Moliere (FR)
(74) Mandataire: Cabinet Laurent & Charras
(86) Numéro de dépôt international: PCT/FR2014/052048
(87) Numéro de publication internationale: WO 2015/028739

(56) Documents cités:
- WO-A1-2005/037650
- US-A- 4 629 531
- US-A- 4 744 845
- US-A1- 2005 167 053

## Description

### DOMAINE TECHNIQUE

La présente invention concerne un procédé de raboutage de deux articles thermofusibles sous forme de bandes ou de nappes. L'invention concerne également un module de raboutage pour la mise en oeuvre dudit procédé.

Le raboutage est une technique bien connue de l'Homme du Métier qui consiste notamment à rendre solidaires deux bandes ou nappes d'un matériau thermofusible. L'une des difficultés principales du raboutage réside dans le fait d'obtenir un raboutage parfait, sans rebord ou bourrelet par exemple.

L'invention trouve notamment une application avantageuse pour les constructeurs ou utilisateurs de machines textiles, mettant en oeuvre des bobines de dévidage de tissu par exemple. En effet, lorsqu'une bobine de dévidage est vide, il est nécessaire de la remplacer par une nouvelle bobine tout en conservant la continuité du tissu par le raboutage de l'extrémité finale de la bobine vide, avec l'extrémité initiale de la nouvelle bobine.

### ETAT ANTERIEUR DE LA TECHNIQUE

Le brevet FR 2 972 433 divulgue un dispositif de raboutage qui comprend notamment une première station de travail apte à souder par ultrasons et à découper deux épaisseurs d'articles, et une deuxième station de travail apte à laminer par ultrasons.

Un tel dispositif est destiné à réaliser une opération de raboutage de l'extrémité finale d'un article issu du déroulement d'une première bobine de dévidage, avec l'extrémité initiale d'un article issu du déroulement d'une deuxième bobine de dévidage afin de former un seul article continu.

Pour l'opération de raboutage, les deux articles sont tendus et superposés. Ces deux articles sont ensuite maintenus en position et simultanément découpés et soudés par l'intermédiaire de moyens de coupe soudante à sonotrode de la première station de travail. Cette opération de coupage/soudage permet de joindre l'extrémité finale de la première bobine à l'extrémité initiale de la deuxième bobine.

La zone de soudure et de découpe est légèrement déformée par une remise partielle à plat et forme ainsi une sorte de bec dont la résistance par soudure est fragile et précaire. L'étape suivante consiste alors à laminer ledit bec. Une fois laminés, les deux articles sont confondus pour n'en former qu'un seul.

Cet état de la technique donne de bons résultats en termes de produits finis, mais, le module mettant en oeuvre le procédé susmentionné est complexe, ce qui augmente son coût de revient. De plus, l'opération de raboutage met en oeuvre une étape de soudage, et une étape de laminage ultérieure. L'article est déplacé entre ces deux opérations, ce qui entraine parfois des incertitudes quant à la position exacte dudit article, ou quant à sa tension lors de l'opération de laminage. Le document US 4 629 531 A est considéré comme représentant l'état le plus proche de l'art antérieure.

### EXPOSE DE L'INVENTION

L'un des buts de l'invention est de fournir une alternative aux procédés et modules de raboutage de l'état de la technique afin d'obtenir un raboutage optimal.

L'invention tend également à de remédier au moins à l'un des inconvénients précités en proposant un procédé et un module de raboutage de deux articles thermofusibles sous forme de bandes ou de nappes, qui soient simples et faciles à mettre en oeuvre.

A cet effet, il a donc été mis au point un procédé de raboutage de deux articles thermofusibles sous forme de bandes ou de nappes.

Conformément à l'invention, le procédé comprend au moins les étapes consistant à :
- réaliser une découpe transversale de l'un des articles, dit premier article, et évacuer l'une des parties découpées ;
- positionner manuellement l'autre article, dit deuxième article, à la place de la partie évacuée, et en chevauchement du premier article ;
- réaliser une découpe transversale de la partie du deuxième article qui est en chevauchement sur le premier article, et évacuer cette partie découpée ;
- positionner automatiquement et mécaniquement le deuxième article en chevauchement sur le premier article suivant une longueur prédéterminée correspondant au maximum à une largeur de soudure ;
- réaliser un soudage transversal de la zone de chevauchement des deux articles selon ladite largeur de soudure.

Le procédé de raboutage permet ainsi de joindre d'une manière optimale deux articles par chevauchement. Ce procédé permet également un alignement bout à bout automatique et mécanique des deux articles, sans intervention d'un opérateur. Il en est de même pour le chevauchement qui est également réalisé de manière automatique et mécanique. Le chevauchement est optimal, constant et linéaire sur toute la largeur des articles à rabouter. Le procédé permet une coupe et un soudage sans déplacement intempestifs des articles et sans tensions sur ces derniers.

Selon une forme de réalisation particulière, les étapes de découpe consistent à déplacer un ensemble de coupage/soudage sur la largeur des articles et en appui contre une zone de coupe d'un organe de contre-appui.

L'étape de soudage consiste, d'une part, à positionner une zone de soudage de l'organe de contre-appui sous les parties en chevauchement des articles et, d'autre part, à déplacer l'ensemble de coupage/soudage sur la largeur des articles et en appui contre ladite zone de soudage.

L'étape consistant à positionner automatiquement et mécaniquement le deuxième article en chevauchement sur le premier article consiste à :
- soulever l'extrémité du deuxième article qui est en regard du premier article ;
- translater ledit deuxième article en direction et en chevauchement du premier article, suivant la longueur prédéterminée ;
- abaisser l'extrémité du deuxième article.

De cette manière, la longueur de recouvrement peut être ajustée en fonction des besoins, ou bien en fonction de l'ensemble de coupage/soudage mis en oeuvre.

L'invention vise également à fournir un module de raboutage à ultrasons pour la mise en oeuvre du procédé précité qui soit d'intégration facile à une machine mettant en oeuvre au moins une bobine de dévidage.

Un autre objectif de l'invention est de fournir un module qui soit de conception simple, sûre et rationnelle.

Le module selon l'invention comprend au moins :
- un ensemble de coupage/soudage déplaçable, d'une part, entre une position de repos et une position de coupage/soudage en appui contre un organe de contre-appui et, d'autre part, transversalement sur la largeur des articles, pour réaliser une coupe ou une soudure d'une largeur prédéterminée ;
- l'organe de contre-appui précité présentant une zone de coupe et une zone de soudage contre lesquelles l'ensemble de coupage/soudage prend appui pour réaliser respectivement une opération de coupe et une opération de soudage, ledit organe de contre-appui est assujetti à des moyens permettant son déplacement pour mettre la zone de coupe ou la zone de soudage en regard de l'ensemble de coupage/soudage, lesdits articles étant destinés à être déplacés d'amont en aval entre lesdits ensembles de coupage/soudage et organe de contre-appui ;
- des moyens amont et aval d'immobilisation des articles disposés de part et d'autre de l'ensemble de coupage/soudage par rapport au sens de déplacement des articles, et ;
- des moyens de déplacement aptes à positionner automatiquement et mécaniquement l'extrémité du deuxième article en chevauchement sur l'extrémité du premier article, et d'une longueur de chevauchement correspondant à la largeur de soudure prédéterminée.

De cette manière, le module est intégré d'une manière simple et optimale en aval d'un dérouleur d'une bobine de dévidage

Selon une forme de réalisation particulière, les moyens de déplacement comprennent :
- une table située en amont de l'organe de contre-appui par rapport au sens de déplacement des articles, ladite table est destinée à supporter l'extrémité du deuxième article en regard du premier article,
- des moyens aptes à permettre un mouvement relatif de la table par rapport à l'organe de contre-appui et selon une direction verticale, de sorte à ce que le plan formé par l'organe de contre-appui soit apte à être décalé vers le bas par rapport au plan de ladite table et,
- des moyens assujettis aux moyens amont d'immobilisation, aptes à les déplacer en direction de l'organe de contre-appui et selon une longueur correspondant à la largeur de soudure prédéterminée.

De préférence, le module selon l'invention comprend deux vérins, dont l'un est assujetti à la table pour la déplacer entre une première position dans laquelle le plan de la table est aligné avec celui de l'organe de contre-appui, et une deuxième position dans laquelle ladite table soulève l'extrémité du deuxième article qui est en regard du premier article. L'autre vérin est assujetti aux moyens amont d'immobilisation pour les déplacer en direction de l'organe de contre-appui.

En ce qui concerne l'ensemble de coupage/soudage, plusieurs formes de réalisation différentes peuvent être envisagées. En effet, l'ensemble de coupage/soudage peut comprendre une lame de coupe pour réaliser une coupe mécanique par écrasement en combinaison avec la zone de coupe, et une sonotrode pour réaliser un soudage par ultrasons par laminage en combinaison avec la zone de soudage.

L'ensemble de coupage/soudage peut également comprendre une sonotrode équipée d'une lame de coupe et de moyens de laminage pour réaliser respectivement une coupe par ultrasons, en combinaison avec la zone de coupe, et un soudage par ultrasons, en combinaison avec la zone de soudage.

L'ensemble de coupage/soudage peut encore comprendre une sonotrode équipée de moyens de laminage pour réaliser un soudage par ultrasons, en combinaison avec la zone de soudage, et une coupe par ultrasons, en combinaison avec la zone de coupe qui comprend, à cet effet, une arête tranchante.

Avantageusement, et pour un maintien optimal des articles à rabouter, au plus près de l'ensemble de coupage/soudage, le module comprend des moyens d'aspiration desdits articles, disposés en amont de la table et en aval de l'organe de contre appui. Ces moyens d'aspiration se présentent par exemple sous la forme de tables munies d'orifices d'aspiration.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique en perspective d'un module de raboutage selon l'invention, monté en sortie d'une bobine de dévidage d'une machine textile ;
- la figure 2 est une représentation schématique illustrant l'intérieur du module de raboutage selon l'invention ;
- la figure 3 est une représentation schématique illustrant une sonotrode vue de côté, ladite sonotrode étant équipée d'une lame de coupe et de moyens de laminage ;
- les figures 4 à 13 sont des vues schématiques successives de l'intérieur d'un module de raboutage selon l'invention, et illustrant le procédé de raboutage selon l'invention, notamment,

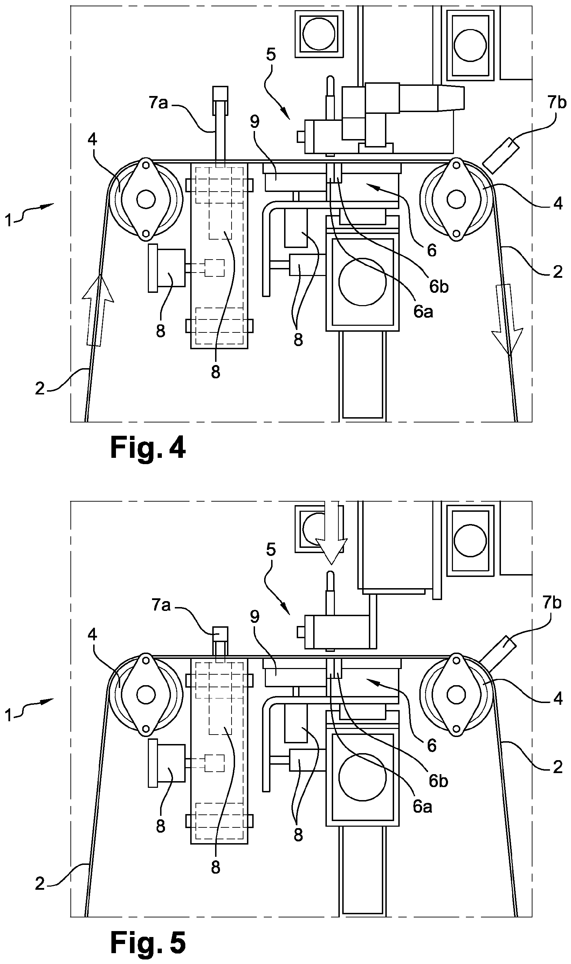

- la figure 4 illustre la position d'origine dans laquelle le premier article est déplacé entre l'ensemble de coupage/soudage et l'organe de contre-appui ;
- la figure 5 illustre la fermeture des pinces amont et aval et le déplacement de l'ensemble de coupage/soudage pour réaliser l'opération de coupe du premier article en tant que telle, en appui contre la zone de coupe ;

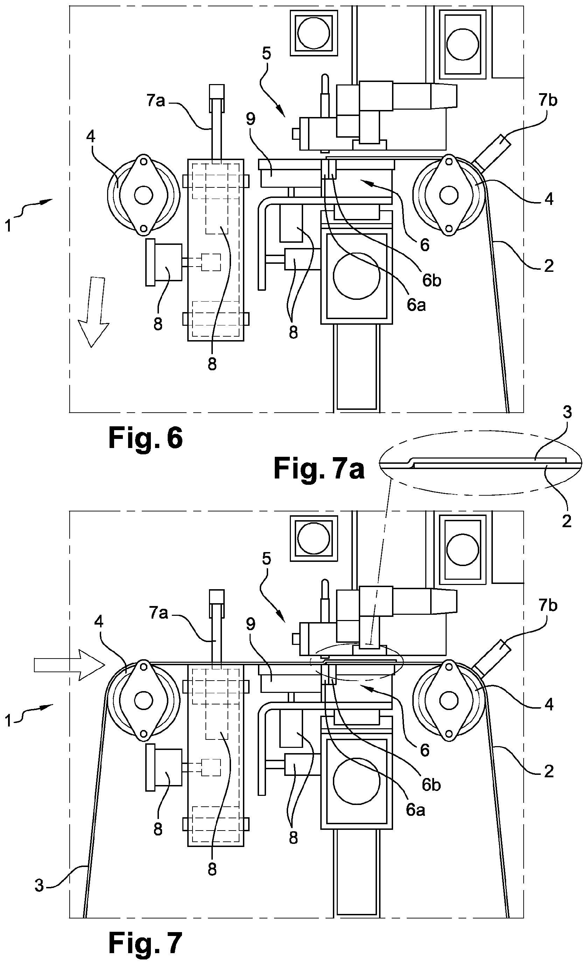

- la figure 6 illustre l'ouverture de la pince amont et l'évacuation de la partie coupée du premier article ;
- la figure 7 illustre le positionnement manuel d'un deuxième article en chevauchement grossier sur le premier article,
- la figure 7a illustre un agrandissement de la zone de chevauchement des deux articles ;

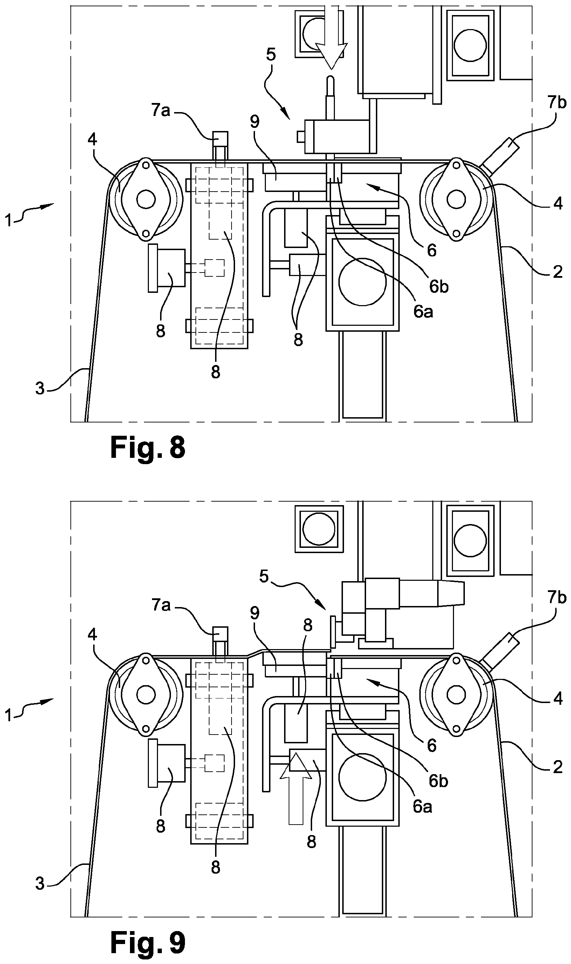

- la figure 8 illustre la fermeture de la pince amont et la découpe de la partie du deuxième article en chevauchement sur le premier article ;
- la figure 9 illustre le déplacement vertical de la table après avoir évacué la partie coupée du deuxième article ;

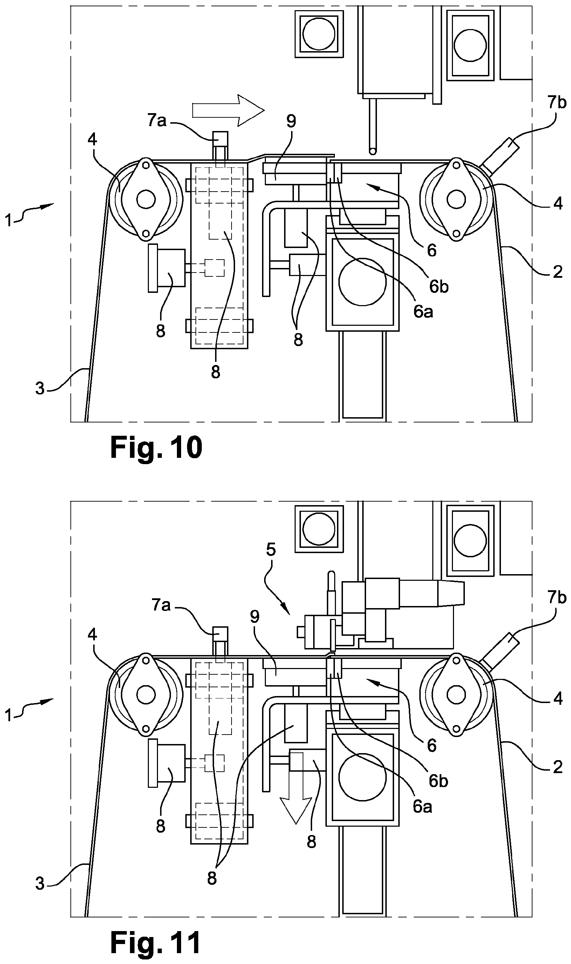

- la figure 10 illustre le déplacement de la pince amont en direction de l'organe de contre appui ;
- la figure 11 illustre l'abaissement de la table pour mettre en chevauchement le deuxième article sur le premier article ;

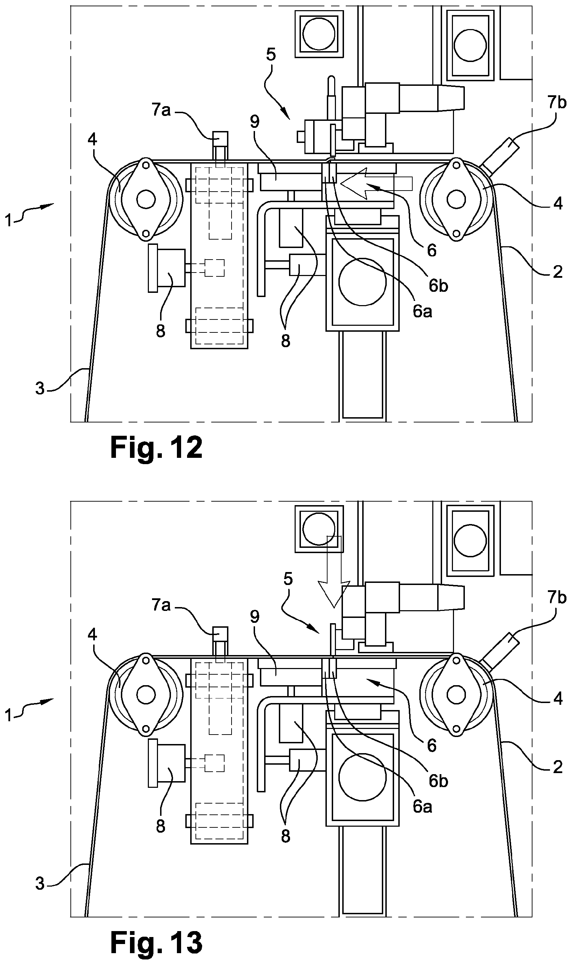

- la figure 12 illustre le déplacement de l'organe de contre-appui pour mettre la zone de soudage en regard de l'ensemble de coupage/soudage ;
- la figure 13 illustre le déplacement de l'ensemble de coupage/soudage pour réaliser l'opération de soudage des parties en chevauchement, en appui contre la zone de soudage.

### EXPOSE DETAILLE DE L'INVENTION

L'invention concerne un procédé et un module (1) pour rabouter deux articles (2, 3) sous forme de bandes ou de nappes. Dans la description qui suit, lesdits module (1) et procédé seront associés à une machine textile (M) mettant en oeuvre des bobines (B) de dévidage. Le procédé et le module (1) selon l'invention permettent ainsi de rabouter l'extrémité finale d'un premier article (2) issu d'une première bobine (B) de dévidage, avec l'extrémité initiale d'un deuxième article (3) issu d'une deuxième bobine (B) de dévidage.

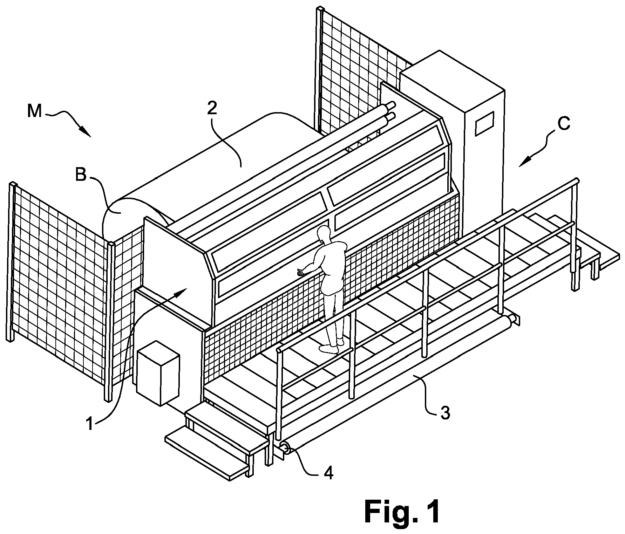

En référence à la figure 1, la machine textile (M) comprend successivement une bobine (B) de dévidage, un module (1) de raboutage et un banc de contrôle (C) du raboutage. La bobine (B) de dévidage comprend un premier article thermofusible (2), tel qu'un textile non tissé par exemple, déroulé et acheminé à l'intérieur du module (1) de raboutage. Le premier article (2) est ensuite évacué par l'intermédiaire de rouleaux de renvoi (4), sous le banc de contrôle (C).

La machine textile (M), le banc de contrôle (C), ou bien l'agencement de ceux-ci, sont bien connus de l'état de la technique et ne font pas partie de l'invention de sorte qu'ils ne seront pas décrits en détail.

L'invention concerne essentiellement le procédé de raboutage et le module (1) pour la mise en oeuvre dudit procédé.

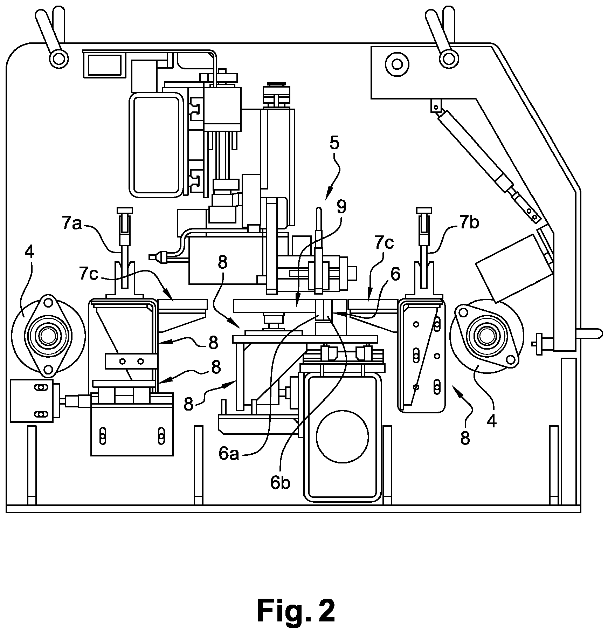

En référence à la figure 2 illustrant l'agencement interne du module (1) de raboutage selon l'invention, celui-ci comprend un ensemble de coupage/soudage (5) destiné à réaliser les opérations de coupe et de soudage en combinaison avec un organe de contre-appui (6).

Les articles (2, 3) à rabouter sont destinés à être acheminés et déplacés d'amont en aval entre ledit ensemble de coupage/soudage (5) et l'organe de contre-appui (6), notamment par l'intermédiaire des rouleaux de renvoi (4). Ces rouleaux de renvoi (4) sont disposés de part et d'autre de l'ensemble de coupage/soudage (5), en amont et en aval par rapport au sens de déplacement desdits articles (2, 3). Les articles (2, 3) ne sont pas représentés sur la figure 2, cependant le sens de déplacement va de gauche à droite.

Le module (1) comprend également des moyens d'immobilisation (7) des articles (2, 3) à couper et à souder. Ces moyens d'immobilisation (7) se présentent sous la forme de deux pinces (7), une pince amont (7a) et une pince aval (7b). Ces pinces (7a, 7b) sont disposées de part et d'autre de l'ensemble de coupage/soudage (5), respectivement après le rouleau amont (4) de renvoi, et avant le rouleau aval (4) de renvoi. Ces pinces (7a, 7b) sont notamment destinées à pincer les articles (2, 3) de part et d'autre de son épaisseur dans le but de le maintenir en position et faciliter les opérations de coupe et de soudage. La pince amont (7a) est mobile en direction de l'ensemble de coupage/soudage (5). A cet effet, la pince amont (7a) est assujettie à un vérin (8), ou tout autre moyen approprié bien connu de l'Homme du Métier, pour permettre son déplacement. La fonction de cette mobilité sera décrite plus en détail dans la suite de la description.

D'autres moyens d'immobilisation (7) peuvent être mis en oeuvre, tels que représentés sur la figure 2, des troisièmes moyens d'immobilisation (7c) peuvent être disposés en amont de et en aval de l'organe de contre appui (6). Ces moyens d'aspiration se présentent par exemple sous la forme de tables munies d'orifices d'aspiration.

L'ensemble de coupage/soudage (5) permet de couper et de souder toute la largeur des articles (2, 3) sous forme de bandes ou de nappes. L'ensemble de coupage/soudage (5) est déplaçable entre une position de repos et une position de coupage/soudage. Dans la position de repos, l'ensemble de coupage/soudage (5) se trouve en regard du ou des articles (2, 3) à couper ou à souder. L'ensemble de coupage/soudage (5) est alors déplaçable verticalement jusqu'à venir en contact avec le ou les articles (2, 3) à couper ou à souder, et en appui contre l'organe de contre-appui (6). Dans cette configuration, l'ensemble de coupage/soudage (5) est en position dite de coupage/soudage. Pour effectuer l'opération de coupe ou de soudage sur toute la largeur des articles (2, 3), l'ensemble de coupage/soudage (5) est également mobile transversalement sur la largeur desdits articles (2, 3). L'ensemble de coupage/soudage (5) est apte à réaliser une soudure d'une largeur prédéterminée. La vitesse de déplacement de l'ensemble de coupage/soudage (5) est avantageusement réglable de manière à s'adapter à tout type d'articles (2, 3) à couper/souder.

L'ensemble de coupage/soudage (5) réalise l'opération de coupe ou de soudage en appui contre un organe de contre-appui (6). Cet organe de contre-appui (6) présente une zone de coupe (6a) et une zone de soudage (6b) contre lesquelles l'ensemble de coupage/soudage (5) prend appui pour réaliser respectivement une opération de coupe et une opération de soudage. L'organe de contre-appui (6) est donc mobile et assujetti à un vérin (8), ou tout autre moyen approprié bien connu de l'Homme du Métier, permettant le déplacement dudit organe de contre-appui (6) pour mettre la zone de coupe (6a) ou la zone de soudage (6b) en regard de l'ensemble de coupage/soudage (5).

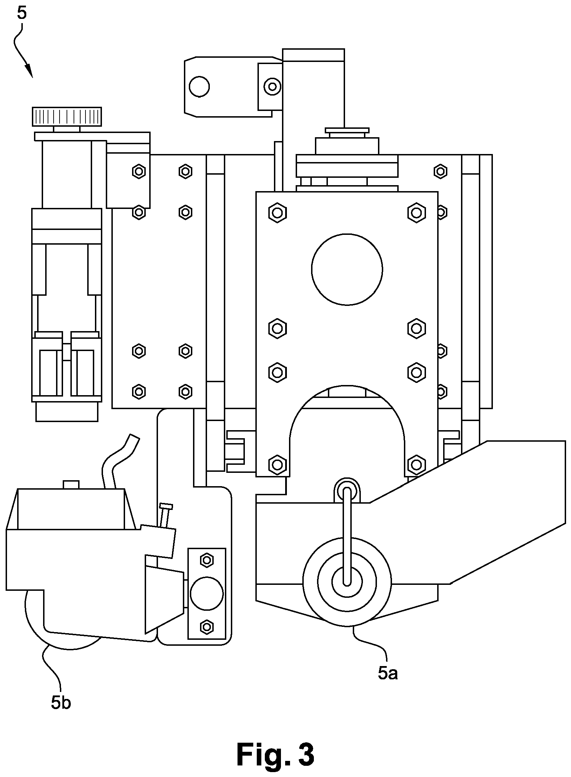

En référence à la figure 3, l'ensemble de coupage/soudage (5) comprend une lame de coupe (5b) pour réaliser une coupe mécanique par écrasement en combinaison avec la zone de coupe (6a) et, d'autre part, une sonotrode (5a) pour réaliser un soudage par ultrasons par laminage en combinaison avec la zone de soudage (6b). La lame de coupe (5b) est de préférence circulaire et sensiblement alignée avec la sonotrode (5a) qui se présente par exemple sous la forme d'une roue de laminage.

La zone de coupe (6a) se présente sous la forme d'une règle plate s'étendant transversalement sur toute la largeur des articles (2, 3) à couper. La zone de soudage (6b) est similaire à la zone de coupe (6a) en ce qu'elle se présente également sous la forme d'une règle, cependant celle-ci est dentée.

Selon une autre forme de réalisation, la zone de coupe (6a) peut présenter une arrête tranchante. Dans cette configuration, l'ensemble de coupage/soudage (5) comprend uniquement une sonotrode (5a) équipée de moyens de laminage. L'opération de coupe est alors réalisée par les moyens de laminage à ultrasons en combinaison avec l'arrête tranchante de la zone de coupe (6a).

Le module (1) comprend en outre une table (9) disposée en amont de l'organe de contre-appui (6), et forme un plan aligné avec celui dudit organe de contre-appui (6). Les articles (2, 3) acheminés à l'intérieur du module (1) se déplacent sur cette table (9) et sur l'organe de contre-appui (6). La table (9) est mobile et assujettie à un vérin (8), ou tout autre moyen approprié bien connu de l'Homme du Métier, pour permettre son déplacement selon une direction verticale.

La table (9) et la pince amont (7a) forment des moyens de déplacement aptes à positionner automatiquement et mécaniquement l'extrémité du deuxième article (3) en chevauchement sur l'extrémité du premier article (2), et selon une longueur de chevauchement correspondant à la largeur de soudure prédéterminée.

En d'autres termes, la table (9) soulève l'extrémité initiale du deuxième article (3) par rapport à l'extrémité finale du premier article (2). La pince amont (7a) déplace ensuite le deuxième article (3), en direction du premier (2) et selon une longueur correspondant à une largeur de soudure. La table (9) abaisse ensuite le deuxième article (3) pour le mettre en chevauchement sur le premier (2).

Il est essentiel qu'il y ait un mouvement relatif de la table (9) par rapport à l'organe de contre-appui (6). La table (9) peut être mobile, ou inversement il peut être envisagé, pour réaliser l'étape de chevauchement en tant que telle, que ce soit l'organe de contre-appui (6) qui soit assujetti à des moyens permettant son déplacement vertical vers le bas, en combinaison avec ladite pince amont (7a) mobile.

Ainsi lors du fonctionnement du module (1) de raboutage, et en référence aux figures 4 à 13, un premier article thermofusible (2), tel qu'un textile non tissé par exemple, est déroulé à partir d'une bobine de dévidage et acheminé au travers du module (1) de raboutage. Lorsque la bobine de dévidage arrive à épuisement, il est nécessaire de la remplacer, et de rabouter l'extrémité finale du premier article (2) avec l'extrémité initiale d'une nouvelle bobine d'un deuxième article thermofusible (3), généralement le même que le premier (2).

Dans cette configuration, le déroulage de la bobine est stoppé, et le premier article (2) est immobilisé et maintenu en position par l'intermédiaire des pinces amont (7a) et aval (7b). L'ensemble de coupage/soudage (5) est déplacé verticalement pour venir en appui contre la zone de coupe (6a) de l'organe de contre-appui (6), et réalise ensuite une découpe transversale à ultrasons du premier article (2).

La pince amont (7a) est ensuite ouverte de manière à évacuer l'extrémité finale du premier article (2), et à permettre le positionnement manuellement par un opérateur de l'extrémité initiale du deuxième article (3) issu d'une deuxième bobine de dévidage. La première bobine est remplacée par cette deuxième bobine. En référence aux figures 7 et 7a, l'opérateur positionne grossièrement l'extrémité initiale du deuxième article (3) en chevauchement sur l'extrémité finale du premier article (2), et la pince amont (7a) est refermée. L'ensemble de coupage/soudage (5) réalise ensuite une seconde découpe transversale, au même niveau que la première. Cette opération permet de découper et d'évacuer la partie du deuxième article (3) en chevauchement sur le premier article (2). Cette opération permet aussi de mettre bout à bout les deux articles (2, 3), sans jeu entre eux, et sans chevauchement.

A partir de cette étape, le deuxième article (3) peut être positionné automatiquement et mécaniquement en chevauchement sur le premier article (2), et d'une longueur correspondant notamment au maximum à la largeur de soudure prédéterminée. Pour se faire la table (9) assujettie à un vérin (8) est déplacée verticalement vers le haut pour soulever l'extrémité du deuxième article (3) qui est en regard du premier article (2). La pince amont (7a) qui est assujettie à un vérin (8) est déplacée en direction de l'organe de contre-appui (6), c'est-à-dire selon une direction sensiblement horizontale, d'amont en aval, et selon une longueur correspondant au maximum à la largeur de soudure prédéterminée. Ce déplacement de la pince (7) permet de translater le deuxième article (3) en direction et en chevauchement du premier article (2). La table (9) est alors abaissée pour mettre en chevauchement lesdits articles (2, 3).

Les deux articles (2, 3) à rabouter se trouvent alors en chevauchement et sont prêts à être soudés. Le chevauchement est optimal, constant et linéaire sur toute la largeur des articles (2,3)

L'organe de contre-appui (6) est déplacé par l'intermédiaire du vérin (8) et selon une direction sensiblement horizontale afin de positionner la zone de soudage (6b) en regard de l'ensemble de coupage/soudage (5). L'ensemble de coupage/soudage (5) est déplacé verticalement pour venir en appui contre cette zone de soudage (6b), et transversalement sur toute la largeur des articles (2, 3) pour réaliser l'opération de soudage par ultrasons desdits deux articles (2, 3).

A cette étape, la table (9) est avantageusement déplacée verticalement vers le haut par l'intermédiaire du vérin (8) pour permettre de décoller les articles (2, 3) de la zone de soudage (6b).

Les pinces amont (7a) et aval (7b) sont ensuite ouvertes pour continuer l'acheminement des articles raboutés.

Comme il ressort de ce qui précède, l'invention concerne un procédé et un module (1) de raboutage qui permettent de réaliser une opération de raboutage par chevauchement, simple et optimale. Le procédé et le module (1) permettent également un raboutage autonome dans lequel l'intervention d'un opérateur est limitée. Un autre avantage réside également dans le fait que la longueur de chevauchement peut être ajustée en fonction des besoins ou bien du matériel de soudage utilisé.

## Revendications

1. Procédé de raboutage de deux articles (2, 3) thermofusibles sous forme de bandes ou de nappes, ***caractérisé* en ce qu'**il comprend au moins les étapes consistant à :
- réaliser une découpe transversale de l'un des articles, dit premier article (2), et évacuer l'une des parties découpées ;
- positionner manuellement l'autre article, dit deuxième article (3), à la place de la partie évacuée, et en chevauchement du premier article (2) ;
- réaliser une découpe transversale de la partie du deuxième article (3) qui est en chevauchement sur le premier article (2), et évacuer cette partie découpée ;
- positionner automatiquement et mécaniquement le deuxième article (3) en chevauchement sur le premier article (2) suivant une longueur prédéterminée correspondant au maximum à une largeur de soudure ;
- réaliser un soudage transversal de la zone de chevauchement des deux articles (2, 3) selon ladite largeur de soudure.

2. Procédé selon la revendication 1, ***caractérisé* en ce que** les étapes de découpe consistent à déplacer un ensemble de coupage/soudage (5) sur la largeur des articles (2, 3) et en appui contre une zone de coupe (6a) d'un organe de contre-appui (6).

3. Procédé selon la revendication 2, ***caractérisé* en ce que** l'étape de soudage consiste, d'une part, à positionner une zone de soudage (6b) de l'organe de contre-appui (6) sous les parties en chevauchement des articles (2, 3) et, d'autre part, à déplacer l'ensemble de coupage/soudage (5) sur la largeur des articles (2, 3) et en appui contre ladite zone de soudage (6b).

4. Procédé selon la revendication 1, ***caractérisé* en ce que** l'étape consistant à positionner automatiquement et mécaniquement le deuxième article (3) en chevauchement sur le premier article (2) consiste à :
- soulever l'extrémité du deuxième article (3) qui est en regard du premier article (2) ;
- translater ledit deuxième article (3) en direction et en chevauchement du premier article (2), suivant la longueur prédéterminée ;
- abaisser l'extrémité du deuxième article (3).

5. Module (1) de raboutage pour la mise en oeuvre du procédé de raboutage de deux articles (2, 3) thermofusibles sous forme de bandes ou de nappes selon la revendication 1, ***caractérisé* en ce qu'**il comprend au moins :
- un ensemble de coupage/soudage (5) déplaçable, d'une part, entre une position de repos et une position de coupage/soudage en appui contre un organe de contre-appui (6) et, d'autre part, transversalement sur la largeur des articles (2, 3), pour réaliser une coupe ou une soudure d'une largeur prédéterminée ;
- l'organe de contre-appui (6) précité présentant une zone de coupe (6a) et une zone de soudage (6b) contre lesquelles l'ensemble de coupage/soudage (5) prend appui pour réaliser respectivement une opération de coupe et une opération de soudage, ledit organe de contre-appui (6) est assujetti à des moyens (8) permettant son déplacement pour mettre la zone de coupe (6a) ou la zone de soudage (6b) en regard de l'ensemble de coupage/soudage (5), lesdits articles (2, 3) étant destinés à être déplacés d'amont en aval entre lesdits ensembles de coupage/soudage (5) et organe de contre-appui (6) ;
- des moyens (7) amont et aval d'immobilisation des articles disposés de part et d'autre de l'ensemble de coupage/soudage (5) par rapport au sens de déplacement des articles (2, 3), et ;
- des moyens de déplacement (7, 8, 9) aptes à positionner automatiquement et mécaniquement l'extrémité du deuxième article (3) en chevauchement sur l'extrémité du premier article (2), et d'une longueur de chevauchement correspondant à la largeur de soudure prédéterminée.

6. Module (1) de raboutage selon la revendication 5, ***caractérisé* en ce que** les moyens de déplacement comprennent :
- une table (9) située en amont de l'organe de contre-appui (6) par rapport au sens de déplacement des articles (2, 3), ladite table (9) est destinée à supporter l'extrémité du deuxième article (3) en regard du premier article (2),
- des moyens (8) aptes à permettre un mouvement relatif de la table (9) par rapport à l'organe de contre-appui (6) et selon une direction verticale, de sorte à ce que le plan formé par l'organe de contre-appui (6) soit apte à être décalé vers le bas par rapport au plan de ladite table (9) et,
- des moyens (8) assujettis aux moyens (7) amont d'immobilisation, aptes à les déplacer en direction de l'organe de contre-appui (6) et selon une longueur correspondant à la largeur de soudure prédéterminée.

7. Module (1) de raboutage selon la revendication 6, ***caractérisé* en ce qu'**il comprend deux vérins (8), dont l'un est assujetti à la table (9) pour la déplacer entre une première position dans laquelle le plan de la table (9) est aligné avec celui de l'organe de contre-appui (6), et une deuxième position dans laquelle ladite table (9) soulève l'extrémité du deuxième article (3) qui est en regard du premier article (2), et dont l'autre est assujetti aux moyens (7) amont d'immobilisation pour les déplacer en direction de l'organe de contre-appui (6).

8. Module (1) de raboutage selon la revendication 5, ***caractérisé* en ce que** l'ensemble de coupage/soudage (5) comprend une lame de coupe (5b) pour réaliser une coupe mécanique par écrasement en combinaison avec la zone de coupe (6a), et une sonotrode (5a) pour réaliser un soudage par ultrasons par laminage en combinaison avec la zone de soudage (6b).

9. Module (1) de raboutage selon la revendication 5, ***caractérisé* en ce que** l'ensemble de coupage/soudage (5) comprend une sonotrode équipée d'une lame de coupe et de moyens de laminage pour réaliser respectivement une coupe par ultrasons en combinaison avec la zone de coupe (6a), et un soudage par ultrasons en combinaison avec la zone de soudage (6b).

10. Module (1) de raboutage selon la revendication 5, ***caractérisé* en ce que** l'ensemble de coupage/soudage (5) comprend une sonotrode équipée de moyens de laminage pour réaliser un soudage par ultrasons en combinaison avec la zone de soudage (6b), et une coupe par ultrasons en combinaison avec la zone de coupe (6a) qui comprend une arête tranchante.

## Patentansprüche

1. Verfahren zum Spleißen von zwei heißschmelzenden Artikeln (2, 3) in Form von Bändern oder Bahnen, **dadurch gekennzeichnet, dass** das Verfahren mindestens folgende Schritte umfasst:
- Ausführung eines quer laufenden Schnitts durch einen der Artikel, dem so genannten ersten Artikel (2), und Entfernung eines der durchgeschnittenen Teile;
- manuelles Positionieren des anderen Artikels, des so genannten zweiten Artikels (3), anstelle des entfernten Teils und in Überlappung mit dem ersten Artikel (2);
- Ausführung eines quer laufenden Schnittes durch das Teil des zweiten Artikels (3), welches den ersten Artikel (2) überlappt und Entfernung dieses durchgeschnittenen Teils;
- automatisches und mechanisches Positionieren des zweiten Artikels (3) in Überlappung mit dem ersten Artikel (2) gemäß einer vorher festgelegten Länge, die höchstens einer Schweißbreite entspricht;
- Ausführung einer quer laufenden Schweißung im Überlappungsbereich der beiden Artikel (2, 3) gemäß der Schweißbreite.

2. Verfahren nach Anspruch 1, **dadurch gekennzeichnet, dass** die Schneidschritte darin bestehen, eine Schneid-/Schweißeinheit (5) über die Breite der Artikel (2, 3) und an einer Schneidzone (6a) eines Andrückorgans (6) anliegend zu bewegen.

3. Verfahren nach Anspruch 2, **dadurch gekennzeichnet, dass** der Schweißschritt darin besteht, einerseits eine Schweißzone (6b) des Andrückorgans (6) unter die sich überlappenden Teile der Artikel (2, 3) zu positionieren und andererseits die Schneid-/Schweißeinheit (5) über die Breite der Artikel (2, 3) und an der Schweißzone (6b) anliegend zu bewegen.

4. Verfahren nach Anspruch 1, **dadurch gekennzeichnet, dass** der Schritt zum automatischen und mechanischen Positionieren des zweiten Artikels (3) in Überlappung mit dem ersten Artikel (2) darin besteht:
- das Ende des zweiten Artikels (3), das dem ersten Artikel (2) zugewandt ist, anzuheben ;
- den zweiten Artikel (3) in Richtung und in Überlappung mit dem ersten Artikel (2) gemäß der vorher festgelegten Länge zu versetzen;
- das Ende des zweiten Artikels (3) abzusenken.

5. Spleißmodul (1) zur Umsetzung des Verfahrens zum Spleißen von zwei heißschmelzenden Artikeln (2, 3) in Form von Bändern oder Bahnen nach Anspruch 1, **dadurch gekennzeichnet, dass** das Modul mindestens Folgendes umfasst:
- eine Schneid-/Schweißeinheit (5), die zur Durchführung eines Schnitts oder einer Schweißung einer vorher festgelegten Breite einerseits zwischen einer Ruheposition und einer Schneid-/Schweißposition an einem Andrückorgan (6) anliegend und andererseits quer laufend über die Breite der Artikel (2, 3) bewegbar ist;
- das erwähnte Andrückorgan (6), welches eine Schneidzone (6a) und eine Schweißzone (6b) aufweist, an denen die Schneid-/Schweißeinheit (5) jeweils zur Ausführung eines Schneidvorgangs und eines Schweißvorgangs anliegt, wobei das Andrückorgan (6) an Mittel (8) gekoppelt ist, die seine Bewegung ermöglichen, um die Schneidzone (6a) oder die Schweißzone (6b) der Schneid-/Schweißeinheit (5) zugewandt zu platzieren, wobei die Artikel (2, 3) dazu bestimmt sind, vor- und nachgelagert zwischen den Schneid-/Schweißeinheiten (5) und dem Andrückorgan (6) hin- und herbewegt zu werden;
- vor- und nachgelagerte Mittel (7) zum Immobilisieren der bezogen auf die Bewegungsrichtung der Artikel (2, 3) beidseitig der Schneid-/Schweißeinheit (5) angeordneten Artikel und;
- Bewegungsmittel (7, 8, 9), die befähigt sind, das Ende des zweiten Artikels (3) automatisch und mechanisch in Überlappung mit dem Ende des ersten Artikels (2) und um eine Überlappungslänge, die der vorher festgelegten Schweißbreite entspricht, zu positionieren.

6. Spleißmodul (1) nach Anspruch 5, **dadurch gekennzeichnet, dass** die Bewegungsmittel Folgendes umfassen:
- einen Tisch (9), der bezogen auf die Bewegungsrichtung der Artikel (2, 3) dem Andrückorgan (6) vorgelagert ist, wobei der Tisch (9) das Ende des zweiten Artikels (3), welches dem ersten Artikel (2) zugewandt ist, tragen soll,
- Mittel (8), die befähigt sind, eine relative Bewegung des Tisches (9) bezogen auf das Andrückorgan (6) und gemäß einer Vertikalrichtung zu ermöglichen, und zwar so, dass die vom Andrückorgan (6) gebildete Ebene befähigt ist, bezogen auf die Ebene des Tisches (9) nach unten versetzt zu werden, und
- Mittel (8), die an die vorgelagerten Mittel (7) zur Immobilisierung gekoppelt und befähigt sind, diese in Richtung des Andrückorgans (6) und gemäß einer Länge, die der vorher festgelegten Schweißbreite entspricht, zu bewegen.

7. Spleißmodul (1) nach Anspruch 6, **dadurch gekennzeichnet, dass** das Modul zwei Zylinder (8) umfasst, von denen der eine an den Tisch (9) gekoppelt ist, um diesen zwischen einer ersten Position, in der die Ebene des Tisches (9) mit der Ebene des Andrückorgans (6) fluchtet, und einer zweiten Position, in der der Tisch (9) das Ende des zweiten Artikels (3) welches dem ersten Artikel (2) zugewandt ist, anhebt, hin- und herzubewegen, und der andere an vorgelagerte Mittel (7) zur Immobilisierung gekoppelt ist, um diese in Richtung des Andrückorgans (6) zu bewegen.

8. Spleißmodul (1) nach Anspruch 5, **dadurch gekennzeichnet dass** die Schneid-/Schweißeinheit (5) zum Durchführen eines mechanischen Quetschschnitts in Verbindung mit der Schneidzone (6a) ein Schneidmesser (5b) und zum Durchführen einer Ultraschallschweißung durch Laminieren in Verbindung mit der Schweißzone (6b) eine Sonotrode (5a) umfasst.

9. Spleißmodul (1) nach Anspruch 5, **dadurch gekennzeichnet, dass** die Schneid-/Schweißeinheit (5) eine mit einem Schneidmesser und Laminiermitteln ausgerüstete Sonotrode umfasst, um jeweils einen Ultraschallschnitt in Verbindung mit der Schneidzone (6a) und eine Ultraschallschweißung in Verbindung mit der Schweißzone (6b) auszuführen.

10. Spleißmodul (1) nach Anspruch 5, **dadurch gekennzeichnet, dass** die Schneid-/Schweißeinheit (5) eine mit Laminiermitteln ausgerüstete Sontrode umfasst, um eine Ultraschallschweißung in Verbindung mit der Schweißzone (6b) und einen Ultraschallschnitt in Verbindung mit der Schneidzone (6a), welche eine Schneidkante umfasst, auszuführen.

## Claims

1. A method for butt-joining two articles (2, 3) thermofusible in the form of strips or mats, **characterized in that** it comprises at least the steps consisting in:
- making a transverse cutout of one of the articles, referred to as the first article (2), and removing one of the cutout parts;
- manually positioning the other article, referred to as the second article (3), in place of the removed part, and overlapping the first article (2);
- making a transverse cutout of the part of the second article (3) that overlaps the first article (2), and removing this cutout part;
- automatically and mechanically positioning the second article (3) to overlap the first article (2) according to a predefined length corresponding at most to a weld width;
- making a transverse welding of the overlapping area of the two articles (2, 3) according to said weld width.

2. The method according to claim 1, **characterized in that** the cutout steps consist in moving a cutting/welding assembly (5) over the width of the articles (2, 3) and bearing against a cutting area (6a) of a counter-support member (6).

3. The method according to claim 2, **characterized in that** the welding step consists, on the one hand, in positioning a welding area (6b) of the counter-support member (6) under the overlapping parts of the articles (2, 3) and on the other hand to move the cutting/welding assembly (5) over the width of the articles (2, 3) and bearing against said welding area (6b).

4. A method according to claim 1, **characterized in that** the step of automatically and mechanically positioning the second article (3) to overlap the first article (2) consists in:
- lifting the end of the second article (3) which is opposite the first article (2);
- translating said second article (3) in the direction of and overlapping the first article (2), along the predefined length;
- lowering the end of the second article (3).

5. A butt-joining module (1) for carrying out the method for butt-joining two articles (2, 3) thermofusible in the form of strips or mats according to claim 1, **characterized in that** it comprises at least:
- a cutting/welding assembly (5) that can be displaced, on the one hand, between a rest position and a cutting/welding position bearing against a counter-support member (6) and, on the other hand, transversely along the width of the articles (2, 3) for cutting or welding by a predefined width;
- the counter-support member (6) previously mentioned having a cutting area (6a) and a welding area (6b) against which the cutting/welding assembly (5) bears to make a cutting operation and a welding operation respectively, said counter-support member (6) is connected to means (8) enabling it to be moved in order to bring the cutting area (6a) or the welding area (6b) opposite the cutting/welding assembly (5), said articles (2, 3) being intended to be moved from upstream to downstream between said cutting/welding assemblies (5) and counter-support member (6);
- means (7) upstream and downstream for immobilizing the articles arranged on each side of the cutting/welding assembly (5) with respect to the moving direction of the articles (2, 3);
- moving means (7, 8, 9) able to automatically and mechanically position the end of the second article (3) overlapping the end of the first article (2) and of an overlapping length corresponding to the predefined weld width.

6. The butt-joining module (1) according to claim 5, **characterized in that** the moving means comprise:
- a table (9) located upstream of the counter-support member (6) with respect to the moving direction of the articles (2, 3), said table (9) being designed to support the end of the second article (3) opposite the first article (2),
- means (8) able to allow relative movement of the table (9) with respect to the counter-support member (6) and in a vertical direction, so that the plane formed by the counter-support member (6) is able to be moved downwards with respect to the plane of said table (9) and,
- means (8) connected to the means (7) upstream of immobilization, able to move them in the direction of the counter-support member (6) and over a length corresponding to the predefined weld width.

7. The butt-joining module (1) according to claim 6, **characterized in that** it comprises two actuators (8), one of which is connected to the table (9) so as to move it between a first position in which the plane of the table (9) is aligned with that of the counter-support member (6), and a second position in which said table (9) lifts the end of the second article (3) which is opposite the first article (2) and the other of which is connected to the means (7) upstream of immobilization in order to move them towards the counter-support member (6).

8. The butt-joining module (1) according to claim 5, **characterized in that** the cutting/welding assembly (5) comprises a cutting blade (5b) to make a mechanical cutting by crushing in combination with the cutting area (6a), and a sonotrode (5a) to make an ultrasonic welding by rolling in combination with the welding area (6b).

9. The butt-joining module (1) according to claim 5, **characterized in that** the cutting/welding assembly (5) comprises a sonotrode equipped with a cutting blade and rolling means to make an ultrasonic cutting in combination with the cutting area (6a), and ultrasonic welding in combination with the welding area (6b) respectively.

10. The butt-joining module (1) according to claim 5, **characterized in that** the cutting/welding assembly (5) comprises a sonotrode equipped with rolling means to make an ultrasonic welding in combination with the welding area (6b), and an ultrasonic cutting in combination with the cutting area (6a) which comprises a cutting edge.
